# EUROPÄISCHE PATENTSCHRIFT

(11) **EP 3 189 384 B1**
(45) Veröffentlichungstag und Bekanntmachung des Hinweises auf die Patenterteilung: **19.06.2019**
(21) Anmeldenummer: 15763265.4
(22) Anmeldetag: 05.09.2015
(51) Int. Cl.: G05B 19/042, G06F 3/01, G02B 27/01

(54) **VORRICHTUNG ZUM ERFASSEN GELEISTETER REINIGUNGSARBEITEN**
DEVICE FOR DETECTING CLEANING WORK WHICH HAS BEEN PERFORMED
DISPOSITIF DE DÉTECTION DE TRAVAUX DE NETTOYAGE EFFECTUÉS

(30) Priorität: 05.09.2014 DE 102014217843
(43) Veröffentlichungstag der Anmeldung: 12.07.2017
(73) Patentinhaber: Cudzilo, Martin, 60313 Frankfurt a.M. (DE)
(72) Erfinder: Cudzilo, Martin, 60313 Frankfurt a.M. (DE)
(74) Vertreter: Dr. Langfinger & Partner
(86) Internationale Anmeldenummer: PCT/EP2015/070306
(87) Internationale Veröffentlichungsnummer: WO 2016/034732

(56) Entgegenhaltungen:
- DE-A1- 10 319 513
- DE-A1-102013 101 496
- DE-U1-202005 001 702
- DE-U1-202005 001 702

## Beschreibung

Die vorliegende Erfindung betrifft eine Vorrichtung zum Vereinfachen einer Reinigung von Oberflächen und ein Verfahren zum Erfassen geleisteter Reinigungsarbeiten.

Nachteilig bei der Durchführung von Reinigungsarbeiten ist, dass oftmals für die Reinigungskraft nicht erkennbar ist, ob ein oder mehrere Bereiche bereits gereinigt wurden. Wenn beispielsweise ein Boden von einer Reinigungskraft staubgesaugt wird, kann diese aufgrund fehlender Markierungen, Erkennungsmerkmale oder Hilfslinien meist nur erahnen, wo genau bisher gesaugt wurde und welche Flächen noch stets zu reinigen sind.

Aufgrund besagter fehlender Markierungen kommt es daher bei verschiedenen Reinigungsvorgängen oftmals zu einer Reinigung mit zu starker Überlappung oder einem nicht-reinigen bestimmter Flächen, was entweder aufgrund des erhöhten Material- und Zeitaufwands zu unnötigen Kosten und ggf. gleichzeitig durch Auslassen zu reinigender Flächen zu einer schlechten Reinigungsqualität bzw. zu Nichterfüllung fälliger Leistungen führt.

Zudem sind Reinigungspläne oftmals sehr umfangreich, komplex, missverständlich und nicht ausreichend klar strukturiert und/oder dargestellt, so dass Reinigungskräfte viel Zeit mit deren Studium verwenden. Unzureichende oder fehlende Kenntnis über die Einarbeitung in die Arbeitsaufgaben, Fehleinschätzungen und mangelnde Sprach- und Fachkenntnis führen daher oftmals zu einem höheren Aufwand und können eine höhere Fehlerquote nach sich ziehen. Bei wechselnden Leistungsvorgaben und/oder Auftragsobjekten und/oder Reinigungspersonal verstärken sich diese Nachteile.

Reinigungsverfahren zum Reinigen von Oberflächen und das Hinterlegen von Reinigungsplänen sind im Stand der Technik vornehmlich mit Bezug auf Reinigungsroboter offenbart. Dabei soll bei Reinigungsrobotern eine möglichst vollständige Bearbeitung der Bodenfläche in möglichst kurzer Zeit erreicht werden. Beispielsweise offenbart EP 2287697 A2 zufällige Navigationsverfahren welche ohne Erstellung bzw. Verwendung einer Karte der Umgebung, in der sich die zu bearbeitende Bodenfläche befindet, auskommen. Das heißt, es wird keine Ortsinformation betreffend Hindernisse, Bodenflächenbegrenzungen, gereinigte/nicht gereinigte Bereiche, etc. verwendet.

Alternativ erstellen Reinigungsroboter eine Karte der Umgebung zur gezielten Pfadplanung und gezielten Reinigung der Bodenfläche mittels eines sogenannten Lokalisierungs- und Kartenerstellungs-Algorithmusses. Hierbei wird eine Karte und die Position des Roboters in der Karte mittels Sensoren ermittelt

Bei derartigen Systemen werden dem Nutzer meist keine kartenbasierten Informationen (z.B. was wurde auf welche Art und Weise gereinigt) mitgeteilt und der Nutzer hat keinen Einfluss auf die interne Verwendung der Karte.

Alternativ dazu sind auch permanent gespeicherte Karten bekannt. In der EP 1 967 116 A1 wird beispielsweise der Verschmutzungsgrad einer Bodenfläche ermittelt und in der Karte gespeichert, um bei nachfolgenden Bearbeitungszyklen die Bearbeitungsintensität entsprechend anzupassen. In der US 6,667,592 B2 wird eine gespeicherte, permanente Karte dazu verwendet, unterschiedliche Funktionen (z.B. Saugen, Wischen) einzelnen Teilbereichen einer Karte zuzuordnen, welche dann von einem Reinigungsgerät autonom abgearbeitet werden können. In der US 2011/0264305 wird ein Verfahren beschrieben, bei dem ein Reinigungsroboter eine Karte über das zu reinigende Gebiet an ein externes Gerät übermittelt und auf diese Art und Weise eine Interaktion mit dem Nutzer zulässt.

DE102013101496 offenbart eine automatische Vorrichtung zum Reinigen von Oberflächen mittels Hochdruckspritzgeräten. Zur Vermeidung von Aufnahme von Beeinträchtigung des Bedienpersonals durch aufgewirbelte Partikel in der Luft erfolgt eine "virtuelle" Reinigung mit einer Attrappe und anschließend darauf aufbauend eine reale Reinigung. Die aus dem Stand der Technik bekannten Reinigungsverfahren beziehen sich somit auf autonome Reinigungsgeräte, die selbsttätig Reinigungsvorgänge durchführen. Dabei ist eine Optimierung der Reinigungszeit zwar gewünscht, jedoch entstehen durch längere Reinigungszeiten ausschließlich geringe Kosten, so dass in der Regel überlappende Reinigungen bevorzugt werden, um ein optimales Reinigungsverfahren zu erreichen. Nachteilig an den bekannten Verfahren ist jedoch, dass diese keine Hilfestellung für Reinigungskräfte bei der Reinigung von Oberflächen im Allgemeinen bieten, sondern ausschließlich Verfahren für autonome Roboter offenbaren. Auch ist es nachteilig, dass nicht erfasst werden kann, ob eine Reinigung wirklich stattgefunden hat. Bei Reinigungsrobotern ist es zwar grundsätzlich bekannt, dass deren abgefahrene Wege aufgezeichnet werden, jedoch ist es derzeit nicht möglich, einen solchen Reinigungsweg bei anderen Reinigungsvorrichtungen, insbesondere manuell betriebenen Staubsaugern, Reinigungstüchern, und dergleichen, zu erfassen und zu bestimmen, auf welchen Flächen tatsächlich gereinigt wurden, und auf welchen die besagten Reinigungsvorrichtungen ausschließlich über die entsprechenden Flächen bewegt wurden, ohne tatsächlich zu reinigen.

Die Aufgabe der vorliegenden Erfindung ist es daher, die Nachteile des Stands der Technik zu überwinden, und insbesondere eine Vorrichtung zu liefern, die eine Reduktion der benötigten Reinigungszeit bei Aufrechterhaltung eines optimalen Reinigungsergebnisses bietet.

Diese Aufgabe wird gelöst durch eine Vorrichtung, insbesondere lösbar, verbindbar oder verbunden mit einer Reinigungsvorrichtung, wobei die Vorrichtung mindestens ein Sensormittel, um die Position mindestens eines zur Reinigung verwendbaren oder verwendeten Reinigungsbereichs der Reinigungsvorrichtung zu erfassen, mindestens eine Anzeigeeinrichtung, und mindestens eine mit der Anzeigeeinrichtung und dem mindestens einen Sensormittel in Wirkverbindung bringbar oder stehende Datenverarbeitungseinrichtung umfasst, wobei die Datenverarbeitungseinrichtung ausgelegt und eingerichtet ist, um mindestens eine Representation mindestens einer zu reinigenden Oberfläche in mindestens einer ersten Farbe oder farblos anzuzeigen und in Abhängigkeit einer erfassten Veränderung der Position mindestens des Reinigungsbereichs der Reinigungsvorrichtung die zu reinigende Oberfläche in mindestens einer zweiten Farbe oder ohne farbliche Überlagerung anzuzeigen, wobei das mindestens eine Sensormittel einen Anpressdruck des mindestens einen zur Reinigung verwendbaren oder verwendeten Bereichs der Reinigungsvorrichtung an die zu reinigende Oberfläche erfasst oder erfassen kann, wobei insbesondere mindestens ein Schwellwert für den Anpressdruck festlegbar oder festgelegt ist, und wobei nur bei einem Erreichen und/oder einem Überschreiten des Schwellwerts bei einer erfassten Veränderung der Position mindestens des zur Reinigung verwendbaren oder verwendeten Bereichs die zu reinigende Oberfläche in mindestens einer ersten Farben und/oder einer weiteren Farbe anzeigbar oder angezeigt ist und/oder
das mindestens eine Sensormittel den Abstand des Auslasses einer Strahldüse einer Reinigungsvorrichtung von der zu reinigenden Oberfläche, den Winkel des Auslasses der Strahldüse bzw. des Strahls zu der zu reinigenden Oberfläche und die Breite und die Stärke des Strahls erfasst oder erfassen kann, wobei insbesondere mindestens ein Schwellwert der Stärke des Strahls auf der Oberfläche festlegbar oder festgelegt ist, und wobei nur bei einem Erreichen und/oder einem Überschreiten des Schwellwerts bei einer erfassten Veränderung der Position der Strahldüse die zu reinigende Oberfläche in mindestens einer ersten Farben und/oder einer weiteren Farbe anzeigbar oder angezeigt ist.

Unter einer Farbe im Sinne der vorliegenden Erfindung soll eine Hervorhebung bzw. Kennzeichnung verstanden werden, die neben einer farblichen Kennzeichnung im klassischen Sinne sämtliche denkbaren Kennzeichnungen wie Musterungen, Buchstaben, Zahlen und dergleichen zusätzlich oder ausschließlich umfassen soll. Das heißt, auch eine Überlagerung einer Oberfläche mit einer Schraffierung, Schattierung, diagonal verlaufenden Linien, etc. soll vorliegende als Darstellung in einer ersten, zweiten oder weiteren Farbe verstanden werden können.

Unter einer Stärke des Strahls kann beispielsweise das Volumen eines Reinigungsmittels, z.B. Wasser, Reinigungslösung, Trockeneis, etc., pro Zeiteinheit bezogen auf den Öffnungsquerschnitt der Strahldüse verstanden werden.

Bei einer erfindungsgemäßen Reinigungsvorrichtung kann es sich beispielsweise um ein Putztuch, einen Staubsauger, einen Hochdruckreiniger, eine Poliermaschine, eine geführte Reinigungsmaschine und dergleichen handeln. Bei mindestens einem zur Reinigung verwendbaren oder verwendeten Reinigungsbereichs kann es sich bei einem Staubsauger beispielsweise um den Saugfuß handeln, beim Wischtuch, Schwamm der Bürste der mit Sensoren bestückte Handschuh, der es/sie/ihn hält, bei dem Hochdruckreiniger um die Auslassdüse in Wirkverbindung mit der eingestellten Stärke und Breite des Strahls, bei der geführten Bodenreinigungsmaschine um die Reinigungs- und Absaugeinheit u.s.w..

Hierbei erkennt die erfindungsgemäße Reinigungsvorrichtung jederzeit welche Gerät und/ oder welcher Arbeitsschritt gerade durchgeführt wird.

Bei zu reinigenden Flächen kann es sich beispielsweise um ganze Bodenflächen, Boden-Laufstrecken, Bodenrandbereiche, Tischplatten, Tischfüße, Schrankfronten, Schrankoberkanten, WC's, Handwaschbecken und dergleichen oder Teile davon handeln, wobei die vorliegende Aufzählung offensichtlich beispielhaft und nicht abschließend ist.

Erfindungsgemäß kann es dabei vorgesehen sein, dass auf der Anzeigeeinrichtung beispielsweise ein Teppichboden initial in mindestens einer ersten Farbe angezeigt wird, beispielsweise in rot. Die erfindungsgemäße Vorrichtung ist dabei mit dem Saugfuß eines Staubsaugers verbunden um eine Reinigung des Teppichbodens zu dokumentieren und dem Benutzer anzuzeigen. Wird nunmehr der Saugfuß über den Teppichboden bewegt, wird diese Bewegung von der Datenverarbeitungseinrichtung erfasst und der gereinigte Bereich wird in mindestens einer zweiten Farbe, beispielsweise grün, dem Benutzer dargestellt.

Alternativ kann es erfindungsgemäß vorgesehen sein, dass der Boden beispielsweise zunächst in der mindestens einen ersten Farbe angezeigt wird, und die Farbe durch Bewegung des Reinigungsbereichs nicht mehr angezeigt wird. Dies kann beispielsweise derart erfolgen, dass ein Boden in rot angezeigt wird und mit Bewegen eines reinigenden Saugfußes eines Staubsaugers die rote Farbe und/oder die Musterung Stück für Stück ausgeblendet wird.

Auch kann alternativ vorgesehen sein, dass ein Boden zunächst farblos dargestellt ist, und mit Bewegen des Reinigungsbereichs Stück für Stück in der mindestens einen zweiten Farbe als gereinigt dargestellt wird.

Grundsätzlich ist es, wie bereits ausgeführt, im Stand der Technik bekannt, dass Karten von zu reinigenden Bereichen von einem Reinigungsroboter selbsttätig erstellt werden und/oder das auf Karten zu reinigenden Bereichen bestimmten Bereichen bestimmte Reinigungsvorgänge zugeordnet werden, z.B. ein Wischen eines gefliesten Bodens oder das Saugen eins Teppichbodens. Dabei kann auch ermittelt werden, welchen Weg ein Reinigungsroboter gefahren ist, um daraus eine Anzeige zu generieren, welcher Bereich vermeintlich bereits gereinigt wurde. Dies ist möglich, da in der Regel bei solchen Reinigungsrobotern erfasst wird, ob deren Reinigungsvorrichtung aktiviert ist.

Ein solches automatisches Erfassen, ob eine Reinigung bei angeschalteter Reinigungsvorrichtung erfolgt, ist jedoch bei manuell betriebenen Reinigungsvorrichtungen nicht möglich. Bei einem Reinigungsroboter ist immer ein ausreichender Bodenkontakt sichergestellt, da dieser sich nicht im belieben Abstand vom Boden bewegen kann, sondern die eigentliche Reinigungsvorrichtung des Reinigungsroboters ausschließlich in dem durch die Räder desselben definierten Abstand vom Boden über diesem bewegbar ist. Somit ist bei Reinigungsrobotern grundsätzlich unterstellt, dass ein abgefahrener Bereich eines Reinigungsroboters auch gereinigt wurde und es ist keine weitere Sensorik notwendig.

Durch ein erfindungsgemäßes Sensormittel wird es hingegen ermöglicht zu erfassen, ob sich der mindestens eine zur Reinigung verwendbare oder verwendete Bereich der Reinigungsvorrichtung mit der zu reinigende Oberfläche tatsächlich in Wirkverbindung steht. Beispielsweise in dem Fall, in dem ein erfindungsgemäßes Sensormittel an dem Saugfuss eines Staubsaugers angeordnet ist, kann dessen Position und der Anpressdruck an den Boden erfasst werden, um eine ordnungsgemäße Reinigung sicherzustellen und die Position zur Farbveränderung der Anzeige zu verwenden.

Es kann auch vorgesehen sein, dass das mindestens eine erfindungsgemäße Sensormittel in einem Handschuh angeordnet ist, um ein Reinigen einer Oberfläche zu erfassen, beispielsweise bei einer Reinigung eines Tisches, eines Fensters, oder dergleichen mit einem Reinigungstuch, Reinigungsschwamm, Bürste oder dergleichen.

Es wird somit durch das erfindungsgemäße Sensormittel ermöglicht, durch ein Festgelegen eines Schwellwertes des Anpressdruckes zu bestimmen, ob eine Reinigung stattfindet oder nicht und diese Information insbesondere in grafische Signale umzusetzen.

Dabei soll insbesondere das erfindungsgemäße Sensormittel kein Abstandsmessinstrument sein, welches ausschließlich den Abstand des zur Reinigung vorgesehenen Bereichs der Vorrichtung von der zu reinigenden Oberfläche direkt oder indirekt erfasst.

Dabei kann gemäß einer Ausführungsform auch vorgesehen sein, dass die zu reinigende Oberfläche in mindestens einer ersten Farbe angezeigt ist und in Abhängigkeit einer erfassten Veränderung der Position mindestens des Reinigungsbereichs der Reinigungsvorrichtung die zu reinigende Oberfläche in mindestens einer zweiten Farbe angezeigt wird, wobei in Abhängigkeit einer erfassten Veränderung der Position mindestens des Reinigungsbereichs der Reinigungsvorrichtung die zu reinigende Oberfläche in mindestens einer weiteren Farbe angezeigt wird und/oder die zu reinigende Oberfläche in mindestens einer weiteren Farbe in Abhängigkeit eines Datums und/oder einer Uhrzeit und/oder eines Zeitraums nach einer vorangehenden Änderung der Anzeigefarbe in einer weiteren Farbe angezeigt wird.

Dies kann für Verschmutzungen vorteilhaft sein, die sich nicht mit nur einem Durchgang beseitigen lassen, sondern mehr als ein Durchgang über die gleiche Stelle erforderlich ist, um die Verschmutzung vollständig und/oder zufriedenstellend zu beseitigen und/oder um mehrere Reinigungsdurchgänge zu dokumentieren.

Auch kann durch ein gezieltes festlegen von Schwellwerten des mindestens einen Sensormittels ermöglicht werden zu bestimmen, ob eine erneute Reinigung durch zwar vorhandenen, aber zu niedrigen Anpressdruck des mindestens einen zur Reinigung verwendbaren oder verwendeten Bereichs der Reinigungsvorrichtung eine erneute Reinigung notwendig ist.

Beispielsweise kann vorgesehen sein, dass ein bestimmter Bereich mindestens zwei Mal gesaugt werden soll. In diesem Fall kann dieser zunächst beispielsweise in rot dargestellt sein, der einmal gereinigte Bereich in einer Farbe mit einem Rotanteil von 70% und einem Grünanteil von 30% und der wie gewünscht doppelt gereinigte Bereich komplett in grün.

Dies kann des Weiteren für Oberflächen vorteilhaft sein, die mindestens zwei unterschiedliche Reinigungsdurchgänge erfordern um das gewünschte Reinigungsergebnis zu erhalten (z-B. 1. Nass abwischen mit blauen Lappen, 2. Streifenfrei trockenwischen mit grünem Lappen) oder beim Saugen eines Bodens, wobei die stärker frequentierte Bereiche, z.B. Laufstrecken, aufgrund stärkerer Verschmutzung oder aufgrund dort zu erwartender stärkerer Verschmutzung intensiver gereinigt werden müssen.

Dabei kann auch vorgesehen sein, dass ein zu reinigender Bereich nach einer vorbestimmten Zeit nach einer Reinigung in einer weiteren Farbe darstellbar ist, um zu dokumentieren, dass die Reinigung planmäßig erfolgt ist, jedoch aufgrund nachfolgender Benutzung wieder verschmutzt sein kann. Beispielsweise kann eine Bodenfläche vor Geschäftsbeginn gereinigt gewesen sein, diese jedoch zwei Stunden nach Geschäftsöffnung bereits wieder verschmutzt sein. Durch eine Kennzeichnung einer solchen Fläche in einer weiteren Farbe, beispielsweise in Gelb, kann dieser Zustand dokumentiert und dargestellt werden (planmäßig gereinigt, jedoch wegen Nutzung und/ oder Staubentwicklung Schmutz zu erwarten).

Gemäß einer Ausführungsform der vorliegenden Erfindung kann dabei vorgesehen sein, dass die Vorrichtung mittels eines Verbindungselements mit der Reinigungsvorrichtung verbindbar oder verbunden ist, insbesondere mittels eines Klettverschlusses, eines Reißverschlusses, einer Haftverbindung, Druckknöpfen, einer Schraubverbindung, einer Klemmverbindung und/oder einer Klebung.

Durch ein solches Verbindungselement kann die Anzahl der Vorrichtungen beim Reinigen deutlich reduziert werden, da nicht für jede Reinigungsvorrichtung eine separate erfindungsgemäße Vorrichtung notwendig ist, sondern diese bei Bedarf mit einer gewünschten Reinigungsvorrichtung verbunden werden können.

Alternativ kann die erfindungsgemäße Vorrichtung selbstverständlich direkt in eine Reinigungsvorrichtung integriert oder integrierbar sein.

Vorteilhafterweise ist bei der Verwendung der erfindungsgemäßen Vorrichtung an unterschiedlichen Reinigungsvorrichtungen jederzeit erkennbar und darstellbar, an welcher Reinigungsvorrichtung sie gerade befestigt ist und/oder welcher Reinigungsprozess mit welchem Arbeitsziel sie gerade ausführt. Dies kann insbesondere durch eine Eingabe an der erfindungsgemäßen Vorrichtung erfolgen, bei der eine bestimmte Reinigungsvorrichtung ausgewählt oder auswählbar ist. Es kann jedoch auch oder alternativ vorgesehen sein, dass z.B. unterschiedliche Sensormittel für unterschiedliche Reinigungsvorrichtungen zum Einsatz kommen können. Dabei kann entweder ein identisches Sensormittel mit einer spezifischen Identifikation, die mit einem Typ einer Reinigungsvorrichtung korrespondiert, zum Einsatz kommen und/oder unterschiedliche Arten und/oder Aufbauten von Sensormitteln für unterschiedliche Reinigungsvorrichtungen.

Auch kann gemäß einer Ausführungsform der vorliegenden Erfindung vorgesehen sein, dass die Reinigungsvorrichtung und/oder der Reinigungsprozess automatisch mittels eines Erkennungsmittels erfassbar ist oder erfasst wird, insbesondere mittels einer Kamera, welches mit der Datenverarbeitungseinrichtung in Wirkverbindung steht oder bringbar ist.

Dies kann insbesondere den Vorteil aufweisen, dass manuelle Eingabefehler vermieden werden. Mittels bekannter Bildverarbeitungsalgorythmen ist gemäß dem Stand der Technik möglich, unterschiedliche Objekte eindeutig voneinander zu unterscheiden und zuzuordnen.

Dabei kann es erfindungsgemäß vorteilhaft sein, dass dem Benutzer optional die erfasste Reinigungsvorrichtung zur Bestätigung eingeblendet wird, und der Nutzer die richtige Erkennung der erfassten Reinigungsvorrichtung bestätigt. Sofern eine falsche Reinigungsvorrichtung erfasst wird, kann eine Liste möglicher alternativer Reinigungsgeräte angezeigt werden.

Auch kann vorgesehen sein, dass Betriebszustände der Reinigungsvorrichtung von der erfindungsgemäßen Vorrichtung erfasst werden. Dies kann beispielsweise umfassen, dass erkannt wird, ob eine Reinigungsvorrichtung bei der Bewegung des Reinigungsbereichs in Betrieb ist und in welchem Betriebsmodus diese betrieben wird.

Vorteilhafterweise erfolgt eine erfindungsgemäße Änderung der Anzeigefarbe ausschließlich, wenn eine Reinigungsvorrichtung in einem Betriebszustand ist, der eine Reinigung ermöglicht.

Beispielsweise sollte ein Staubsauger eingeschaltet sein, einen entsprechender Anpressdruck und eine Bewegung signalisieren, wobei ein ausgeschalteter Staubsauger bzw. ein eingeschalter Staubsauger ohne einen entsprechenden Anpressdruck und/oder ohne eine Bewegung zu signalisieren keine Farbveränderung der Anzeige verursacht.

Beispielsweise wird ebenso keine Farbveränderung signalisiert, wenn der Staubsauger eingeschaltet und die Bodendüse in Bewegung ist, aber der entsprechende Anpressdruck der Bodendüse zur reinigenden Oberfläche nicht vorhanden ist.

Dabei kann es auch vorgesehen sein, dass das mindestens eine Sensormittel einen Laser-Range-Scanner, odometrische Sensoren, Berührungssensoren und/oder Beschleunigungssensoren und/oder ausgelegt und eingerichtet ist, um eine Triangulation mittels Kamera und Laser und/oder mit Radar oder Infrarot auszuführen. Zudem kann vorgesehen sein, dass ein Höhensensor die Höhe einer zu reinigenden Oberfläche erfasst. Einige zu reinigende Oberflächen befinden sich in Höhen, für deren Erreichen und Reinigen man zusätzlichen Aufwand (Leiter, Steiger, Hebebühne) benötigt, der den Aufwand wie auch damit verbundene Kosten trotz einfacher Reinigung massiv erhöhen kann.

Mit solchen Sensoren kann es zum Einen möglich werden, die Position der Erfindungsgemäßen Vorrichtung und/oder des Reinigungsbereichs zu erfassen, und optional zum Anderen gleichzeitig eine korrekte Verwendung des zu reinigenden Bereichs zu überwachen.

Dabei kann es erfindungsgemäß vorteilhaft sein, dass die Vorrichtung eine Kamera umfasst, und die Datenverarbeitungseinrichtung basierend auf den Daten der Kamera die Repräsentation der mindestens einen zu reinigenden Oberfläche errechnet und/oder basierend auf den Daten der Kamera die mindestens einer zu reinigenden Oberfläche mit der mindestens einen ersten Farbe und/oder der mindestens einen zweiten Farbe überlagert auf der mindestens einen Anzeigeeinrichtung darstellt.

Des Weiteren erkennt die Kamera z.B. die unterschiedlichen Farben der Reinigungstücher und/oder Geräte (Farbkodierung) und kann dementsprechend registrieren ob die richtigen Tücher gemäß Farbe in der richten Reihenfolge und auf der richtigen Oberfläche angewendet werden (z.B. Rot = Sanitär (trocken), Blau = Inventar (nass), Grün = Inventar (trocken), Gelb = Glasflächen (nass)).

Durch eine solche Kamera kann insbesondere auch ohne Raumpläne oder bei Abweichungen von vorhandenen Plänen eine erfindungsgemäße farbliche Überlagerung von zu reinigenden Flächen erfolgen. Beispielsweise kann ein Tisch in einem Raum verstellt werden, auf einem Schreibtisch können Gegenstände liegen, usw.

Auch kann auf Raumpläne verzichtet werden, indem beispielsweise ein Bodenbereich, ein Oberfläche eines Möbelstücks und/oder Fensterflächen und dergleichen automatisch mittels im Stand der Technik bekannter Software-Algorithmen erfasst und farblich überlagert werden.

Gemäß einer Ausführungsform der Erfindung kann vorgesehen sein, dass die mindestens eine Anzeigeeinrichtung in Form eines mobilen Endgeräts, insbesondere eines Notebooks, eines Netbooks, eines Smartphones, eines Tablet-PCs, und/oder eine Datenbrille, vorzugsweise einer Datenbrille mit integrierter Kamera, bereitgestellt ist.

Auch kann vorgesehen sein, dass die Anzeigeeinrichtung die zu reinigende Oberfläche in der mindestens einen ersten Farbe und/oder der mindestens einen zweiten Farbe gemeinsam mit einer aktuellen Ansicht eines Benutzers der Vorrichtung in Form einer augmented reality anzeigt.

Dies hat insbesondere den Vorteil, dass eine aktuelle Ansicht eines Raums, eines Außenbereichs, eines Möbelstücks, oder dergleichen direkt überlagert dargestellt werden kann.

Ein Vorteil wird besonders deutlich bei einer Verwendung einer Datenbrille mit integrierter Kamera. Setzt die Reinigungskraft die Datenbrille auf, wird direkt Ihre aktuelle Sicht durch farbliche Überlagerungen der fälligen bzw. zu reinigenden Flächen überlagert, und somit sowohl die anfallenden Reinigungsarbeiten, insbesondere in der vorgesehen Reihenfolge, als auch die Durchführung der Reinigung dokumentiert.

Beispielsweise kann in einem Raum an einem ersten Zeitpunkt angezeigt werden, insbesondere durch eine Rotfärbung des Bodens, dass dieser zu saugen ist. Mit absaugen wird dieser nach und nach beispielsweise grün eingefärbt, so dass sowohl Doppelreinigung vermieden werden als auch keine Bereiche ausgelassen werden, da diese rot aufscheinen ungeachtet aus
welcher Richtung und/oder welchem Winkel die Oberfläche über das mobile Endgerät bzw. über die dort befindliche Kamera/Bildschirm betrachtet wird.

An einem weiteren Zeitpunkt können zusätzlich die Möbel oder ein Teil der Möbel oder die Fenster rot eingefärbt sein, um auch deren Reinigung indirekt zu beauftragen.

Wird im Team gereinigt, kann jedes Teammitglied direkt erfassen, welche Arbeiten bereits ausgeführt wurden bzw. noch anstehen. Auch kann eine Aufsichtsperson die Reinigung leicht kontrollieren, da stets noch in der ersten Farbe eingefärbte Flächen direkt angezeigt werden.

Somit wird auch bei einer Teamreinigung die Arbeitszeit der Reinigungskräfte optimal eingesetzt und eine Nachkontrolle, sei es durch einen Menschen oder ein Softwareprogramm in Raktion bzw. in Wirkverbindung der eingesetzten Hardware, vereinfacht.

Dabei kann es erfindungsgemäß vorgesehen sein, dass in einer Speichereinrichtung der Datenverarbeitungseinrichtung ein Ortsprofil umfasst ist, welches mittels einer Eingabeeinrichtung der Datenverarbeitungseinrichtung ausgewählt werden kann und/oder basierend auf einer Ortsbestimmung der Datenverarbeitungseinrichtung automatisch ausgewählt ist, vorzugsweise mittels GPS, WLAN-Ortung, GPRS Triangulation und/oder Bluetooth, wobei das Ortsprofil insbesondere zu reinigende Oberflächen in einem Gebäude, einem Schiff, einem Zug, einem Flugzeug und/oder einem Außengelände umfasst.

Dies führt dazu, dass eine Reinigungskraft die einen Reinigungsauftrag vornimmt entweder automatisch die anfälligen Arbeiten angezeigt bekommt, oder diese sich nach Eingabe ihrer Position anzeigen lassen kann.

Vorteilhafterweise kann auch vorgesehen sein, dass die mindestens eine Anzeigeeinrichtung ausgelegt und eingerichtet ist, um basierend auf der Position des Benutzers, des Ortsprofils, und insbesondere der aktuellen Orientierung der Anzeigeeinrichtung im Raum Richtungspfeile anzuzeigen, die in Richtung nicht angezeigter zu reinigender Oberflächen zeigen.

Einige auszuführende Reinigungsarbeiten befinden sich in mehreren Räumen oder an Orten, die außerhalb des Blickfeldes liegen, zum Beispiel das Reinigen einer höher gelegenen Oberseite (z.B. über Augenhöhe gelegene Regalablage) oder innerhalb eines verschlossenen Schranks, oder in einer derart weiten Entfernung, dass man sich diesen zunächst bis auf eine bestimmte Distanz nähern muss, damit dieser von der Reinigungskraft bzw. von der Kamera erkannt bzw. erfasst wird (z.B. kleine Gegenstände oder Bereiche davon). Auf solche Reinigungsarbeiten kann durch ein Einblenden von Richtungspfeilen hingewiesen werden.

Auch kann vorgesehen sein, dass die Datenverarbeitungseinrichtung ausgelegt und eingerichtet ist, um in Reaktion auf eine Eingabe des Benutzers an der Eingabeeinrichtung zusätzlich Informationen mit Bezug auf eine ausgewählte zu reinigende Oberfläche anzuzeigen.

Die Eingabeeinrichtung kann dabei erfindungsgemäß gleichsam auf Sprachbefehle reagieren, beispielsweise "Material" um geeignete Reinigungsmaterial anzuzeigen oder "Clip" um ein Video der ausführenden Reinigung anzuzeigen.

Dies hat den Vorteil, dass Reinigungsanweisungen für bestimmte Objekte oder Oberflächen, auch mehrsprachig, direkt anzeigbar sind. Dies kann neben Text auch, ein Bild, eine Animation ein Video und/oder eine Audiodatei umfassen, die den durchzuführenden Reinigungsvorgang näher bzw. genau oder genauer erläutert.

Erfindungsgemäß kann auch vorgesehen sein, dass die Datenverarbeitungseinrichtung ausgelegt und eingerichtet ist, einen bestimmten Benutzer zu identifizieren, insbesondere durch eine Eingabe des Benutzer mittels der Eingabevorrichtung, und zu reinigenden Oberflächen in Abhängigkeit des identifizierten Benutzers in der mindestens einen ersten Farbe, der mindestens einen zweiten Farbe, mindestens einer Musterung bzw. eines Musters und/oder nicht farblich überlagert anzuzeigen.

Dies kann insbesondere bei Reinigungen im Team dazu dienen, dass bestimmten Reinigungskräften bestimmte Aufgaben zuweisbar sind. Durch die Erfassung einzelner Personen kann zudem die Arbeitszeit und durch Nachkontrollen die Arbeitsqualität einzelner Reinigungskräfte erfasst werden.

Erfindungsgemäß kann bevorzugt sein, dass die mindestens eine Anzeigeeinrichtung, die mindestens eine Eingabeeinrichtung und/oder das mindestens eine Sensormittel drahtlos mit der Datenverarbeitungseinrichtung kommuniziert, insbesondere über Bluetooth, eine Funkverbindung und/oder WLAN.

Dies ermöglicht beispielsweise eine drahtlose Datenübertragung zwischen an der Reinigungsvorrichtung befestigten Teilen der erfindungsgemäßen Vorrichtung, der Anzeigeeinrichtung, der Eingabeeinrichtung und/oder der Datenverarbeitungseinrichtung und erleichtert somit deren Einsatz.

Auch kann vorgesehen sein, dass die Abmessungen des Reinigungsbereichs der Reinigungsvorrichtung in der Datenverarbeitungseinrichtung hinterlegbar und/oder hinterlegt und/oder eingebbar sind, wobei die Anzeige der Representation der mindestens einen zu reinigenden Oberfläche in Abhängigkeit der erfassten Veränderung der Position mindestens des Reinigungsbereichs der Reinigungsvorrichtung in der mindestens einen zweiten Farbe in Abhängigkeit der Abmessung des Reinigungsbereichs abschnittsweise erfolgt.

Dies führt dazu, dass eine Reinigung mit beispielsweise einem Handstaubsauger eine Einfärbung kleinerer Bereiche verursacht als eine Reinigung mit einem Saugfuß eines größeren Staubsaugers. Im Falle eines Strahlreinigungsgeräts bestimmt sich beispielsweise der Reinigungsbereich durch den Abstand des Auslasses der Strahldüse von der zu reinigenden Oberfläche, dem Winkel des Auslasses der Strahldüse bzw. des Strahls zu der besagten Oberfläche, also der Strahlrichtung, die Strahlbreite und der Stärke des Strahls.

Erfindungsgemäß kann vorgesehen sein, dass der Benutzer und/oder ein weiterer Benutzer das Ortsprofil durch eine Eingabe aktualisieren kann und/oder dass das Ortsprofil durch Erfassung von Verschmutzungen, insbesondere durch das Erfassen farbliche Abweichungen mittels der Kamera, automatisch aktualisiert wird.

Eine solche Eingabe kann über ein weiteres elektronisches Gerät und/oder interaktiv erfolgen. Beispielsweise kann ein Benutzer eine Verschmutzung, eine Beschädigung und/ oder Oberfläche mit der Hand einkreisen und somit markieren, wobei der Ort insbesondere automatisch erfasst wird. Dies kann beispielsweise eine neue Verschmutzung sein, deren Reinigung beauftragt werden soll, oder eine Verschmutzung, die sich (mit dem ihm zur Verfügung stehenden Mitteln) nicht beheben lässt oder eine neue Oberfläche, die in den Reinigungsplan übernommen werden soll.

Auch kann erfindungsgemäß vorgesehen sein, dass die Vorrichtung mit einem Server in Wirkverbindung steht oder bringbar ist, wobei das Ortsprofil der Datenarbeitungseinrichtung und des Servers synchronisiert oder synchronisierbar ist.

Des weiteren kann erfindungsgemäß vorgesehen sein, dass die Datenverarbeitungseinrichtung ausgelegt und eingerichtet ist, Reinigungsdaten umfassend die Position mindestens des Reinigungsbereichs der Reinigungsvorrichtung, einen Zeitpunkt bzw. Zeitraum, einen ersten Parameter repräsentativ für einen Benutzer und/oder einen zweiten Parameter repräsentativ für eine Reinigungsvorrichtung zu speichern, wobei diese Daten insbesondere mit einem Server und/oder einer weiteren Datenverarbeitungseinreichung und/oder Datenspeicherungseinrichtung synchronisierbar oder synchronisiert sind.

Auch kann erfindungsgemäß vorgesehen sein, dass einem Benutzer auf einer mit dem mindestens einen Server in Wirkverbindung stehenden Anzeigeeinrichtung, insbesondere in Form eines Display, vorzugsweise eines direkt oder indirekt über eine weitere Datenverarbeitungseinrichtung, beispielsweise in Form eines Computers, Tablets, Mobiltelefone, oder dergleichen, verbindbaren oder verbundenen Displays, die Reinigungsdaten anzeigbar oder angezeigt sind.

Eine solche Erfassung der Reinigungsdaten geht mit einer Vielzahl von Vorteilen einher. Durch eine Erfassung und Übertragung der Reinigungsdaten an einen Server wird die "Aufzeichnung" der tatsächlich ausgeführten Reinigungsarbeiten in Echtzeit ermöglicht. Gleichzeitig kann die Aufzeichnung und Darstellung der geleisteten Arbeiten und damit verbundenen Kosten in Echtzeit erfolgen. Durch die Reinigungsdaten kann somit zum Einen die Arbeitszeit und Arbeitsaufwand einer Reinigungskraft erfasst werden, zum Anderen kann jedoch gleichzeitig oder alternativ eine Abrechnung der durchgeführten Arbeiten in Abhängigkeit der real durchgeführten Arbeiten vorgenommen werden. Oftmals werden zusätzliche Arbeiten durchgeführt, beispielsweise durch unvorhergesehene Verschmutzungen, die derzeit nur aufwändig manuell erfasst werden können. Wie bei einer Software zur Berechnung von Telefonaten, SMS, MMS, Datenvolumen, etc. eines bestimmten Handynutzers in Abhängigkeit von Ort, Tag, Uhrzeit, Tarif, etc. ermöglicht die erfindungsgemäße Vorrichtung gleichermaßen die Aufzeichnung der Arbeitsleistung nach vorbenannten und arbeitsspezifischen Kriterien in Echtzeit und deren Abrechnung. Berechnungen, Zwischenkosteneinsicht und Rechnungstellungen sind dadurch präzise möglich, da die erfindungsgemäße Vorrichtung es ermöglicht, in einer Datenbank auf einem Server zu erfassen, welche Leistung mit welchen Mitteln zu welchem Zeitpunkt an jenem Ort und Tarif von einer bestimmten Person ausgeführt wird bzw. wurde.

Alternativ ist es auch vorstellbar, dass anstelle eines Servers sämtliche Daten in der Datenverarbeitungseinrichtung der erfindungsgemäßen Vorrichtung erfasst und gespeichert werden, und ohne Zwischenschaltung eines Servers direkt von dieser ausgewertet werden oder alternativ von einem anderen Datenverarbeitungssystem, welches mit der erfindungsgemäßen Vorrichtung in Wirkverbindung bringbar ist oder steht.

Aufgrund der Aufzeichnung ist zudem eine Leistungsaufstellung jederzeit Grafisch und Schriftlich, wie eine detaillierte Telefonrechnung-Kostenaufstellung, darstellbar. Weiterhin können die Reinigungsdaten für die Erstellung von exakten Statistiken und Rechnungen verwendet werden und somit insbesondere das Erstellen von Abrechnungen individuell und automatisch erfolgen.

Schließlich kann es vorteilhaft sein, dass die erfindungsgemäße Vorrichtung keine autonome Reinigungseinrichtung ist, insbesondere kein Reinigungsroboter.

Auch liefert die Erfindung eine Verwendung einer erfindungsgemäßen Vorrichtung mit einem Staubsauger, einem Handschuh, einer Bodenpoliermaschine, einem Dampfreiniger, einem Hochdruckreiniger und/oder einer Fensterreinigungsvorrichtung.

Selbstverständlich ist die vorliegende Erfindung nicht auf die explizit genannten Reinigungsvorrichtungen beschränkt, sondern diese sind selbstverständlich beispielhaft zu verstehen. Grundsätzlich ist erfindungsgemäß eine Verwendung einer erfindungsgemäßen Vorrichtung mit einer beliebigen Reinigungsvorrichtung vorgesehen.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.

Dabei zeigt:
- Figur 1:: Eine schematische Seitenansicht einer erfindungsgemäßen Vorrichtung in Wirkverbindung mit einem Staubsauger; und
- Figur 2:: eine schematische perspektivische Ansicht eines Raumes auf einer Anzeigeeinrichtung einer erfindungsgemäßen Vorrichtung.

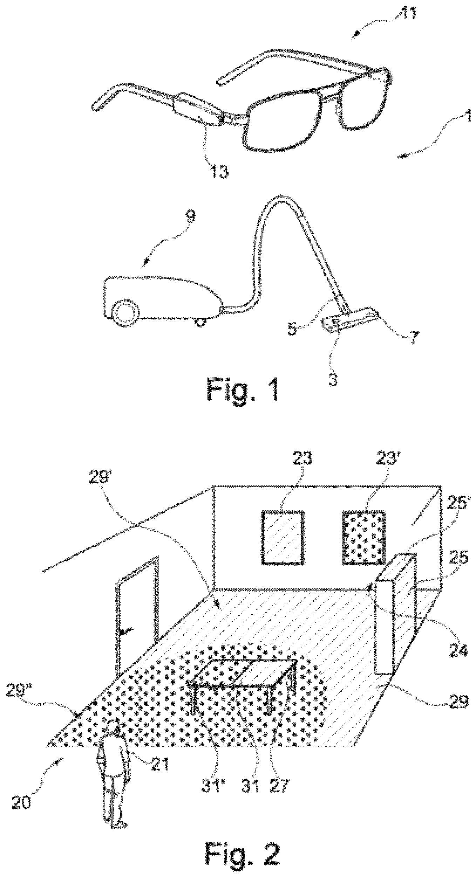

In Figur 1 ist eine schematische Seitenansicht einer erfindungsgemäßen Vorrichtung 1 gezeigt. Diese umfasst ein Sensormittel 3 und eine Datenverarbeitungseinrichtung 5. Das Sensormittel 3 ist dabei an dem Saugfuß 7 eines Staubsaugers 9 befestigt und erfasst die Position des Saugfußes sowie eine Berührung bzw. einen Anpressdruck. Dabei werden Daten von der Datenverarbeitungseinrichtung 5 an die Datenbrille 11 übertragen, wobei die Datenverarbeitungseinrichtung 5 dabei in Form einer augmented reality Daten einer Kamera 13, die an der Datenbrille 11 angeordnet ist, verwendet, um den aktuellen Blick des Benutzers mit zusätzlichen Informationen zu überlagern.

Die Datenbrille 1 kommuniziert dabei drahtlos und kontinuierlich mit der Datenverarbeitungseinrichtung 5 und registriert über das Sensormittel 3, ob der reinigungsausführende Teil, in dem Fall der Saugfuß 7, ausreichenden Kontakt zur Bodenfläche hat, also ob das mindestens eine Sensormittel einen ausreichenden Anpressdruck größer oder gleich dem Schwellwert erfasst, und ob und wie schnell sich der Saugfuß 7 bewegt. In Echtzeit wird diese Bewegung auf der Datenbrille 11 dem Benutzer durch einen Übergang von der mindestens einen ersten Farbe in die mindestens einen zweiten Farbe angezeigt und somit die Bewegung des Saugfußes 7 gespeichert. Für den Benutzer stellt sich die Darstellung in der Datenbrille 11 beispielsweise so dar, als ob ein ursprünglich rot überlagerter Boden nach und nach grün überstrichen wird. Dabei entspricht die Breite der Farbmarkierung der Breite des reinigenden Teils des Saugfußes und die Länge des Wegs der abgefahrenen Strecke.

Die besagten Änderungen der farblichen Überlagerung bleiben bis zu einem Status- oder Fälligkeitswechsel erhalten, so dass der Benutzer genau erkennen kann, wo bereits eine Reinigung erfolgt ist. Dadurch kann eine randnahe Reinigung mit wenigen Überlappungen erfolgen. Im Fall der erfindungsgemäßen mehreren Reinigungsvorgänge kann dabei der Farbübergang von der ersten zu der zweiten Farbe mittels mehrerer Zwischenfarben erfolgen, wobei beispielsweise ein Übergang von rot (nicht gereinigt) auf grün (gereinigt) in diesem Fall durch ein mehrfaches Reinigen erfolgt. Erst wenn die zu reinigende Fläche vollständig grün erscheint, erhält der Benutzer eine Anzeige, dass die Reinigung an der soeben gereinigten Oberfläche abgeschlossen ist.

Figur 2 zeigt eine schematische perspektivische Ansicht eines Raumes 20 auf einer Anzeigeeinrichtung einer erfindungsgemäßen Vorrichtung. Die erfindungsgemäße Vorrichtung selbst ist in Figur 2 nicht gezeigt. Ein Benutzer 21 sieht in der schematischen Darstellung von Figur 2 einen Raum mit farblichen Überlagerungen. Ein erstes Fenster 23 ist beispielsweise bereits gereinigt und in einer zweiten Farbe dargestellt, während ein weiteres Fenster 23' noch zu reinigen ist und daher noch in der ersten Farbe dargestellt ist. Ein Richtungspfeil 24 weist auf eine zu reinigende Oberseite 25' eines Schranks 25, die aus der Perspektive des Benutzer nicht erkennbar ist. Der Bodenbereich 29 ist bereits teilweise gereinigt, insbesondere im Bereich des Tisches 27, was durch ein Einfärbung in einer zweiten Farbe 29" angezeigt ist. Der weitere Bereich 29' des Bodens 29 ist noch nicht gereinigt und wird daher wiederum in der ersten Farbe dargestellt.

Auch der Tisch 27 ist bereits teilweise im Bereich 31 gereinigt, während der Bereich 31' noch zu reinigen ist.

Wie anhand der Figur 2 verdeutlich, kann durch die farbliche Überlagerung von zu reinigenden Oberflächen in mindestens einer ersten Farbe und nach Reinigung in mindestens einer zweiten Farbe einer Reinigungskraft mit einfachen Mitteln angezeigt werden, welche Reinigungsarbeiten noch durchzuführen sind, und welche bereits erledigt wurden.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung (1), insbesondere lösbar, verbunden mit einer Reinigungsvorrichtung, wobei die Vorrichtung mindestens ein Sensormittel, um die Position mindestens eines zur Reinigung verwendeten Reinigungsbereichs der Reinigungsvorrichtung zu erfassen, mindestens eine Anzeigeeinrichtung, und mindestens eine mit der Anzeigeeinrichtung und dem mindestens einen Sensormittel in Wirkverbindung stehende Datenverarbeitungseinrichtung (5) umfasst, wobei die Datenverarbeitungseinrichtung ausgelegt und eingerichtet ist, um mindestens eine Repräsentation mindestens einer zu reinigenden Oberfläche in mindestens einer ersten Farbe oder farblos anzuzeigen (29') und in Abhängigkeit einer erfassten Veränderung der Position mindestens des Reinigungsbereichs der Reinigungsvorrichtung die zu reinigende Oberfläche in mindestens einer zweiten Farbe anzuzeigen, **dadurch gekennzeichnet, dass** das mindestens eine Sensormittel einen Anpressdruck des mindestens einen Reinigungsbereichs der Reinigungsvorrichtung an die zu reinigende Oberfläche erfasst, wobei mindestens ein Schwellwert für den Anpressdruck festgelegt ist, und wobei nur bei einem Erreichen und/oder einem Überschreiten des Schwellwerts bei einer erfassten Veränderung der Position mindestens des Reinigungsbereichs die zu reinigende Oberfläche in der zweiten Farbe angezeigt wird (29") und/oder das mindestens eine Sensormittel den Abstand des Auslasses einer Strahldüse einer Reinigungsvorrichtung von der zu reinigenden Oberfläche, den Winkel des Auslasses der Strahldüse bzw. des Strahls zu der zu reinigenden Oberfläche, die Breite und die Stärke des Strahls erfasst, wobei mindestens ein Schwellwert der Stärke des Strahls auf der Oberfläche festgelegt ist, und wobei nur bei einem Erreichen und/oder einem Überschreiten des Schwellwerts bei einer erfassten Veränderung der Position der Strahldüse die zu reinigende Oberfläche in der zweiten Farbe angezeigt wird.

2. Vorrichtung nach Anspruch 1, **dadurch gekennzeichnet, dass** die Vorrichtung mittels eines Verbindungselements mit der Reinigungsvorrichtung verbunden ist, insbesondere mittels eines Klettverschlusses, eines Reißverschlusses, einer Haftverbindung, Druckknöpfen, einer Schraubverbindung, einer Klemmverbindung und/oder einer Klebung.

3. Vorrichtung nach Anspruch 1 oder 2, **dadurch gekennzeichnet, dass** das mindestens eine Sensormittel ein Laser-Range-Scanner, ein odometrischer Sensor, ein Berührungssensor und/oder ein Beschleunigungssensor ist und/oder ausgelegt und eingerichtet ist, um eine Triangulation mittels Kamera und Laser auszuführen.

4. Vorrichtung nach einem der vorangehenden Ansprüche, **dadurch gekennzeichnet, dass** die Vorrichtung eine Kamera umfasst, und die Datenverarbeitungseinrichtung basierend auf den Daten der Kamera die Repräsentation der mindestens einen zu reinigenden Oberfläche errechnet und/oder basierend auf den Daten der Kamera die mindestens einer zu reinigenden Oberfläche mit der mindestens einen ersten Farbe und/oder der mindestens einen zweiten Farbe überlagert auf der mindestens einen Anzeigeeinrichtung darstellt und/oder die mindestens eine Anzeigeeinrichtung in Form eines mobilen Endgeräts, insbesondere eines Notebooks, eines Netbooks, eines Smartphones, eines Tablet- PCs, und/oder einer Datenbrille, vorzugsweise einer Datenbrille mit integrierter Kamera, bereitgestellt ist und/oder in einer Speichereinrichtung der Datenverarbeitungseinrichtung ein Ortsprofil umfasst, welches mittels einer Eingabeeinrichtung der Datenverarbeitungseinrichtung ausgewählt werden kann und/oder basierend auf einer Ortsbestimmung der Datenverarbeitungseinrichtung automatisch ausgewählt ist, vorzugsweise mittels GPS, WLAN-Ortung, GPRS Triangulation und/oder Bluetooth, wobei das Ortsprofil insbesondere eine zu reinigende Oberfläche in einem Gebäude, einem Schiff, einem Zug, einem Flugzeug und/oder einem Außengelände umfasst.

5. Vorrichtung nach einem der vorangehenden Ansprüche, **dadurch gekennzeichnet, dass** die Anzeigeeinrichtung die zu reinigende Oberfläche in der mindestens einen ersten Farbe und/oder der mindestens einen zweiten Farbe gemeinsam mit einer aktuellen Ansicht eines Benutzers der Vorrichtung in Form einer augmented reality anzeigt und/oder die mindestens eine Anzeigeeinrichtung ausgelegt und eingerichtet ist, um basierend auf der Position des Benutzers, des Ortsprofils, und insbesondere der aktuellen Orientierung der Anzeigeeinrichtung im Raum Richtungspfeile anzuzeigen, die in Richtung nicht angezeigter zu reinigende Oberflächen zeigen und/oder die Datenverarbeitungseinrichtung ausgelegt und eingerichtet ist, um in Reaktion auf eine Eingabe des Benutzers an der Eingabeeinrichtung zusätzlich Informationen mit Bezug auf eine ausgewählte zu reinigende Oberfläche anzuzeigen.

6. Vorrichtung nach einem der vorangehenden Ansprüche, **dadurch gekennzeichnet, dass** die Datenverarbeitungseinrichtung ausgelegt und eingerichtet ist, einen bestimmten Benutzer zu identifizieren, insbesondere durch eine Eingabe des Benutzer mittels der Eingabevorrichtung, und zu reinigenden Oberflächen in Abhängigkeit des identifizierten Benutzers in der mindestens einen ersten Farbe, der mindestens einen zweiten Farbe und/oder nicht farblich überlagert anzuzeigen.

7. Vorrichtung nach einem der vorangehenden Ansprüche, **dadurch gekennzeichnet, dass** die zu reinigende Oberfläche in mindestens einer ersten Farbe angezeigt ist und in Abhängigkeit einer erfassten Veränderung der Position mindestens des Reinigungsbereichs der Reinigungsvorrichtung die zu reinigende Oberfläche in mindestens einer zweiten Farbe angezeigt wird, wobei in Abhängigkeit einer erfassten Veränderung der Position mindestens des Reinigungsbereichs der Reinigungsvorrichtung die zu reinigende Oberfläche in mindestens einer weiteren Farbe angezeigt wird und/oder die zu reinigende Oberfläche in mindestens einer weiteren Farbe in Abhängigkeit eines Datums und/oder einer Uhrzeit und/oder eines Zeitraums nach einer vorangehenden Änderung der Anzeigefarbe in einer weiteren Farbe angezeigt wird.

8. Vorrichtung nach einem der vorangehenden Ansprüche, **dadurch gekennzeichnet, dass** die Abmessungen des Reinigungsbereichs der Reinigungsvorrichtung in der Datenverarbeitungseinrichtung hinterlegt und/oder eingebbar sind, wobei die Anzeige der Repräsentation der mindestens einen zu reinigenden Oberfläche in Abhängigkeit der erfassten Veränderung der Position mindestens des Reinigungsbereichs der Reinigungsvorrichtung in der mindestens einen zweiten Farbe in Abhängigkeit der Abmessung des Reinigungsbereichs abschnittsweise erfolgt und/oder der Benutzer und/oder ein weiterer Benutzer das Ortsprofil durch eine Eingabe aktualisieren kann und/oder dass das Ortsprofil durch Erfassung von Verschmutzungen, insbesondere durch das Erfassen farbliche Abweichungen mittels der Kamera, automatisch aktualisiert.

9. Vorrichtung nach einem der vorangehenden Ansprüche, **dadurch gekennzeichnet, dass** die Vorrichtung mit einem Server in Wirkverbindung steht, wobei Daten der, insbesondere das Ortsprofil, der Datenverarbeitungseinrichtung und des Servers synchronisiert oder synchronisierter ist und/oder die Datenverarbeitungseinrichtung ausgelegt und eingerichtet ist, Reinigungsdaten umfassend die Position mindestens des Reinigungsbereichs der Reinigungsvorrichtung, einen Zeitpunkt bzw. Zeitraum, einen ersten Parameter repräsentativ für einen Benutzer und/oder einen zweiten Parameter repräsentativ für eine Reinigungsvorrichtung zu speichern, wobei diese Daten insbesondere mit einem Server synchronisieret sind.

10. Vorrichtung nach einem der vorangehenden Ansprüche, **dadurch gekennzeichnet, dass** die Vorrichtung keine autonome Reinigungseinrichtung ist, insbesondere kein Reinigungsroboter.

11. Vorrichtung nach einem der vorangehenden Ansprüche, wobei die Reinigungseinrichtung ein Staubsauger, ein Handschuh, eine Bodenreinigungsmaschine, ein Dampfreiniger, ein Hochdruckreiniger und/oder eine Fensterreinigungsvorrichtung ist.

## Claims

1. Device (1) connected, in particular detachably, to a cleaning device, the device comprising at least one sensor means in order to detect the position of at least one cleaning area of the cleaning device used for the cleaning, at least one display device, and at least one data processing device (5) operatively connected to the display device and the at least one sensor means, the data processing device being designed and configured to display (29') at least one representation of at least one surface to be cleaned in at least one first colour or not coloured and, depending on a detected change in the position of at least the cleaning area of the cleaning device, to display the surface to be cleaned in at least one second colour,
**characterized in that** the at least one sensor means detects the contact pressure of the at least one cleaning area of the cleaning device on the surface to be cleaned, wherein at least one threshold value for the contact pressure is defined, and wherein the surface to be cleaned is displayed (29") in the second colour only when the threshold value is reached and/or exceeded during a detected change in the position at least of the cleaning area,
and/or the at least one sensor means detects the distance of the outlet from a jet nozzle of a cleaning device from the surface to be cleaned, the angle of the outlet of the jet nozzle or of the jet to the surface to be cleaned, the width and the intensity of the jet, wherein at least one threshold value of the intensity of the jet on the surface is defined, and wherein the surface to be cleaned is displayed in the second colour only when the threshold value is reached and/or exceeded during a detected change in the position of the jet nozzle.

2. Device according to Claim 1, **characterized in that** the device is connected to the cleaning device by means of a connecting element, in particular by means of a hook-and-loop fastener, a zip fastener, an adhesive connection, press studs, a screw connection, a clamped connection and/or an adhesive bond.

3. Device according to Claim 1 or 2, **characterized in that** the at least one sensor means is a laser range scanner, an odometric sensor, a touch sensor and/or an acceleration sensor and/or is designed and configured to perform triangulation by means of camera and laser.

4. Device according to one of the preceding claims, **characterized in that** the device comprises a camera, and the data processing device calculates the representation of the at least one surface to be cleaned on the basis of the data from the camera and/or represents the at least one surface to be cleaned overlaid with the at least one first colour and/or the at least one second colour on the at least one display device on the basis of the data from the camera, and/or the at least one display device is provided in the form of a mobile terminal, in particular a Notebook, a Netbook, a smartphone, a Tablet PC and/or data spectacles, preferably data spectacles with integrated camera, and/or comprises a location profile in a storage device of the data processing device, which can be selected by means of an input device of the data processing device and/or is selected automatically on the basis of a localization of the data processing device, preferably by means of GPS, WLAN location, GPRS triangulation and/or Bluetooth, wherein the location profile in particular comprises a surface to be cleaned in a building, a ship, a train, an aircraft and/or an outdoor area.

5. Device according to one of the preceding claims, **characterized in that** the display device displays the surface to be cleaned in the at least one first colour and/or the at least one second colour together with an up-to-date view of a user of the device in the form of augmented reality, and/or the at least one display device is designed and configured to display directional arrows on the basis of the position of the user, the location profile and in particular the up-to-date orientation of the display device in space, the directional arrows pointing in the direction of surfaces to be cleaned that are not displayed, and/or the data processing device is designed and configured additionally to display information referring to a selected surface to be cleaned, in reaction to an input of the user on the input device.

6. Device according to one of the preceding claims, **characterized in that** data processing device is designed and configured to identify a specific user, in particular by means of an input of the user by means of the input device, and to display surfaces to be cleaned overlaid in the at least one first colour, the at least one second colour and/or not coloured, depending on the identified user.

7. Device according to one of the preceding claims, **characterized in that** the surface to be cleaned is displayed in at least one first colour and, depending on a detected change in the position of at least the cleaning area of the cleaning device, the surface to be cleaned is displayed in at least one second colour, wherein, depending on the detected change in the position of at least the cleaning area of the cleaning device, the surface to be cleaned is displayed in at least one further colour, and/or the surface to be cleaned is displayed in at least one further colour, depending on a date and/or a time and/or time period following a preceding change in the display colour is displayed in a further colour.

8. Device according to one of the preceding claims, **characterized in that** the dimensions of the cleaning area of the cleaning device are stored in and/or can be input into the data processing device, wherein the display of the representation of the at least one surface to be cleaned, depending on the detected change in the position of at least the cleaning area of the cleaning device, is carried out section by section in the at least one second colour, depending on the dimensions of the cleaning area, and/or the user and/or a further user can update the location profile by means of an input, and/or **in that** the location profile is updated automatically by detecting soiling, in particular by the detection of colour deviations by means of the camera.

9. Device according to one of the preceding claims, **characterized in that** the device is operatively connected to a server, wherein data of the, in particular the location profile, of the data processing device and of the server is synchronized or more synchronized and/or the data processing device is designed and configured to store cleaning data comprising the position of at least the cleaning area of the cleaning device, a time or time period, a first parameter representative of a user and/or a second parameter representative of a cleaning device, this data in particular being synchronized with a server.

10. Device according to one of the preceding claims, **characterized in that** the device is not an autonomous cleaning device, in particular not a cleaning robot.

11. Device according to one of the preceding claims, wherein the cleaning device is a vacuum cleaner, a glove, a floor cleaning machine, a steam cleaner, a high-pressure cleaner and/or a window cleaning device.

## Revendications

1. Dispositif (1) relié, en particulier de manière amovible, à un dispositif de nettoyage, dans lequel le dispositif comprend au moins un moyen de détection destiné à détecter la position d'au moins une zone de nettoyage du dispositif de nettoyage utilisée pour le nettoyage, au moins un dispositif d'affichage et au moins un dispositif de traitement de données (5) qui est en communication fonctionnelle avec le dispositif d'affichage et ledit au moins un moyen de détection, dans lequel le dispositif de traitement de données est conçu et adapté pour afficher (29') au moins une représentation d'au moins une surface à nettoyer dans au moins une première couleur ou sans couleur et pour afficher la surface à nettoyer dans au moins une deuxième couleur en fonction d'une variation détectée de la position au moins de la zone de nettoyage du dispositif de nettoyage, **caractérisé en ce que** ledit au moins un moyen de détection détecte une pression de contact de ladite au moins une zone de nettoyage du dispositif de nettoyage sur la surface à nettoyer,
dans lequel au moins une valeur de seuil est définie pour la pression de contact, et dans lequel la surface à nettoyer n'est affichée (29") que dans la deuxième couleur et/ou ledit au moins un moyen de détection ne détecte la distance de l'orifice de sortie d'une buse d'éjection d'un dispositif de nettoyage par rapport à la surface à nettoyer, l'angle de l'orifice de sortie de la buse d'éjection ou du jet par rapport à la surface à nettoyer, la largeur et l'intensité du jet, que lorsque la valeur de seuil est atteinte et/ou dépassée lors d'une variation détectée de la position d'au moins la zone de nettoyage, dans lequel au moins une valeur de seuil de l'intensité du jet sur la surface est définie, et dans lequel la surface à nettoyer n'est affichée dans la deuxième couleur que lorsque la valeur de seuil est atteinte et/ou dépassée dans lors d'une variation détectée de la position de la buse d'éjection.

2. Dispositif selon la revendication 1, **caractérisé en ce que** le dispositif est relié au dispositif de nettoyage au moyen d'un élément de liaison, en particulier au moyen d'une fermeture velcro, d'une fermeture à glissière, d'une liaison adhésive, d'une fermeture à pression, d'une liaison vissée, d'une liaison par serrage et/ou d'un adhésif.

3. Dispositif selon la revendication 1 ou 2, **caractérisé en ce que** ledit au moins un moyen de détection est un télémètre laser, un capteur odométrique, un capteur tactile et/ou un capteur d'accélération et/ou est conçu et adapté pour effectuer une triangulation au moyen d'une caméra et d'un laser.

4. Dispositif selon l'une des revendications précédentes, **caractérisé en ce que** le dispositif comprend une caméra, et **en ce que** le dispositif de traitement de données calcule la représentation de ladite au moins une surface à nettoyer sur la base des données de la caméra, et/ou représente ladite au moins une surface à nettoyer en superposant ladite au moins une première couleur et/ou ladite au moins une deuxième couleur sur ledit au moins un dispositif d'affichage sur la base des données de la caméra, et/ou ledit au moins un dispositif d'affichage est prévu sous la forme d'un terminal mobile, en particulier un ordinateur portable, un miniportatif, un téléphone intelligent, une tablette-PC et/ou des lunettes de données, de préférence des lunettes de données avec caméra intégrée, et/ou comprend, dans un dispositif de mémoire du dispositif de traitement des données, un profil de localisation qui peut être sélectionné au moyen d'un dispositif d'entrée du dispositif de traitement des données et/ou qui est automatiquement sélectionné sur la base d'une détermination de localisation du dispositif de traitement de données, de préférence au moyen d'un GPS, d'une localisation WLAN, d'une triangulation GPRS et/ou Bluetooth, dans lequel le profil de localisation comprend notamment une surface à nettoyer dans un bâtiment, un navire, un train, un aéronef et/ou un espace extérieur.

5. Dispositif selon l'une des revendications précédentes,
**caractérisé en ce que** le dispositif d'affichage affiche la surface à nettoyer dans ladite au moins une première couleur et/ou ladite au moins une deuxième couleur en association avec une vue actuelle d'un utilisateur du dispositif sous forme de réalité augmentée et/ou **en ce que** ledit au moins un dispositif d'affichage est conçu et adapté pour afficher, sur la base de la position de l'utilisateur, du profil de localisation et en particulier de l'orientation actuelle du dispositif d'affichage dans l'espace, des flèches de direction qui pointent dans la direction de surfaces à nettoyer qui ne sont pas affichées et/ou le dispositif informatique est conçu et adapté pour afficher en outre des informations relatives à une surface à nettoyer sélectionnée en réponse à la saisie effectuée par l'utilisateur sur le dispositif de saisie.

6. Dispositif selon l'une des revendications précédentes, **caractérisé en ce que** le dispositif de traitement de données est conçu et adapté pour identifier un utilisateur particulier, en particulier en saisissant l'utilisateur au moyen du dispositif de saisie, et pour afficher de manière superposée en fonction de l'utilisateur identifié des surfaces à nettoyer dans ladite au moins une première couleur, ladite au moins une deuxième couleur et/ou sans couleur.

7. Dispositif selon l'une des revendications précédentes, **caractérisé en ce que** la surface à nettoyer est affichée dans au moins une première couleur et, en fonction d'une variation détectée de la position d'au moins la zone de nettoyage du dispositif de nettoyage, la surface à nettoyer est affichée dans au moins une deuxième couleur, dans lequel la surface à nettoyer est affichée dans au moins une autre couleur en fonction d'une variation détectée de la position d'au moins la zone de nettoyage du dispositif de nettoyage et/ou la surface à nettoyer est affichée dans au moins une autre couleur en fonction d'une date et/ou d'une heure et/ou d'un intervalle de temps s'étant écoulé après une variation précédente de la couleur d'affichage dans une autre couleur.

8. Dispositif selon l'une des revendications précédentes, **caractérisé en ce que** les dimensions de la zone de nettoyage du dispositif de nettoyage sont stockées et/ou peuvent être saisies dans le dispositif de traitement de données, dans lequel l'affichage de la représentation de ladite au moins une surface à nettoyer est effectué par sections en fonction de la variation détectée de la position d'au moins la zone de nettoyage du dispositif de nettoyage dans ladite au moins une deuxième couleur en fonction des dimensions de la zone de nettoyage et/ou l'utilisateur et/ou un autre utilisateur peut mettre à jour le profil de localisation en effectuant une saisie et/ou **en ce que** le profil de localisation est automatiquement mis à jour par détection de salissures, en particulier par détection de variations de couleur au moyen de la caméra.

9. Dispositif selon l'une des revendications précédentes, **caractérisé en ce que** le dispositif est en communication fonctionnelle avec un serveur, dans lequel des données du, en particulier le profil de localisation, du dispositif de traitement de données et du serveur sont synchronisées ou plus synchronisées et/ou le dispositif de traitement de données est conçu et adapté pour stocker des données de nettoyage comprenant la position d'au moins la zone de nettoyage du dispositif de nettoyage, un instant ou un intervalle de temps, un premier paramètre représentatif d'un utilisateur et/ou un deuxième paramètre représentatif d'un dispositif de nettoyage, dans lequel lesdites données sont en particulier synchronisées avec un serveur.

10. Dispositif selon l'une des revendications précédentes, **caractérisé en ce que** le dispositif n'est pas un dispositif de nettoyage autonome, en particulier n'est pas un robot de nettoyage.

11. Dispositif selon l'une des revendications précédentes, dans lequel le dispositif de nettoyage est un aspirateur, un gant, une machine de nettoyage du sol, un nettoyeur vapeur, un nettoyeur haute pression et/ou un dispositif de nettoyage de vitres.
